# EUROPÄISCHE PATENTANMELDUNG

(11) **EP 4 438 376 A1**
(43) Veröffentlichungstag der Anmeldung: **02.10.2024**
(21) Anmeldenummer: 24159020.7
(22) Anmeldetag: 22.02.2024
(51) Int. Cl.: B60L 1/00, B60L 7/10, B60L 8/00, B60L 53/14, B60L 53/30, B60L 53/51, B60L 53/80, B60L 55/00, H02S 10/40

(54) **SYSTEM ZUR MOBILEN ENERGIEVERSORGUNG, REGELMODUL, VERFAHREN ZUR MOBILEN ENERGIEVERSORGUNG UND FAHRZEUG**

(30) Priorität: 28.02.2023 DE 102023104895
(71) Anmelder: Kuhlgatz, Klaus, 66123 Saarbrücken (DE); Sevenig, Jürgen Heinz, 66123 Saarbrücken (DE)
(72) Erfinder: Kuhlgatz, Klaus, 66123 Saarbrücken (DE); Sevenig, Jürgen Heinz, 66123 Saarbrücken (DE)
(74) Vertreter: Patentanwälte Bernhardt / Wolff Partnerschaft mbB

(57) **Zusammenfassung**

Die Erfindung betrifft ein System (1a) zur mobilen Energieversorgung, insbesondere zur Energieversorgung von Kraftfahrzeugen während der Fahrt und von Gebäuden im Ruhezustand. Um besonders einfach die Reichweite von Elektrofahrzeugen zu erhöhen, umfasst das System (1a) einen Anhänger (4a) zur zeitweisen Ankupplung an ein Kraftfahrzeug (2a), wobei in dem Anhänger (4a) ein Akku (6a) sowie ein Regelmodul (7a) zur Versorgung des Kraftfahrzeugs (2a) aus dem Akku (6a) insbesondere während der Fahrt vorgesehen sind.

## Beschreibung

Die Erfindung betrifft ein System zur mobilen Energieversorgung, insbesondere zur Energieversorgung von Kraftfahrzeugen und Gebäuden, nach dem Oberbegriff des Anspruchs 1, ein Regelmodul für ein derartiges System, ein Verfahren zur mobilen Energieversorgung insbesondere von Kraftfahrzeugen während der Fahrt oder von Gebäuden im Ruhezustand sowie ein Fahrzeug.

Durch Benutzung ist bekannt, die oftmals begrenzte Reichweite von batteriebetriebenen Elektrofahrzeugen (BEV) durch einen zusätzlichen Verbrennungsmotor und einen Tank mit fossilen Energieträgern (Hybridantrieb) zu vergrößern. Neben dem zusätzlichen Gewicht, wodurch sich die Zuladung des Kraftfahrzeugs reduziert, wird damit aber auch die gewünschte Reduzierung des Schadstoffausstoßes und allgemein der Verzicht auf fossile Energieträger nicht erreicht.

Aufgabe der Erfindung ist es, ein System zu schaffen, welches besonders einfach die Reichweite von Elektrofahrzeugen, also Kraftfahrzeugen mit Elektroantrieb wie batteriebetriebenen Elektrofahrzeugen (BEV), Brennstoffzellenfahrzeugen mit Akku, Plug-in-Hybrid-Fahrzeugen (PHEV) und Mildhybrid-Fahrzeugen (MHEV), erhöht.

Diese Aufgabe wird dadurch gelöst, dass das System einen Anhänger zur zeitweisen Ankupplung an ein Kraftfahrzeug umfasst, wobei in dem Anhänger mindestens ein Akku (Akkumulator) sowie ein Regelmodul zur Versorgung des Kraftfahrzeugs mit elektrischer Energie aus dem mindestens einen Akku insbesondere während der Fahrt vorgesehen sind. Ein derartiger Anhänger umfasst in bekannter Weise eine Anhängerkupplung zur zeitweisen Befestigung des Anhängers an einem Kraftfahrzeug. Durch den Akku in dem Anhänger kann die Reichweite des Kraftfahrzeugs, an welchem der Anhänger befestigt ist, deutlich erhöht werden. Über das Regelmodul kann die an das Kraftfahrzeug während der Fahrt übertragene elektrische Energie geregelt werden und es ist möglich, über das Regelmodul weitere Zu- und Abflüsse (bidirektional) von elektrischer Energie zwischen dem Akku und weiteren Verbrauchern bzw. Erzeugern von elektrischer Energie zu regeln, wie im Detail nachfolgend beschrieben wird.

Das System kann vorzugsweise ein in einem Kraftfahrzeug angeordnetes weiteres Regelmodul umfassen, welches mit dem Regelmodul in dem angehängten Anhänger über mindestens eine Energie- bzw. Stromleitung verbunden ist, insbesondere um während der Fahrt des Kraftfahrzeugs elektrische Energie von dem Akku in dem Anhänger dem Kraftfahrzeug zuzuführen. Das Regelmodul in dem Kraftfahrzeug kann dabei in die Bordelektronik des Kraftfahrzeugs integriert sein und insbesondere Informationen über eine Antriebsbatterie des als Elektrofahrzeug ausgebildeten Kraftfahrzeugs durch separate Messung oder Kommunikation mit der Bordelektronik des Kraftfahrzeugs sammeln und auswerten. Ausgehend von dem jeweiligen Anforderungsprofil kann dann über die Energie- bzw. Stromleitung zwischen den Regelmodulen dem Kraftfahrzeug elektrische Energie aus dem Akku des Anhängers zugeführt werden oder es kann auch elektrische Energie beispielsweise beim Rekuperieren dem Akku zugeführt werden, insbesondere wenn die Rekuperationsleistung des Kraftfahrzeugs und/oder des Anhängers die Aufnahmeleistung der Antriebsbatterie übersteigt.

In einer besonders bevorzugten Ausführungsform können das Regelmodul in dem angehängten Anhänger und das Regelmodul in dem Kraftfahrzeug über mindestens eine Kommunikationsleitung miteinander verbunden sein. Über die Kommunikationsleitung können Daten zwischen den Regelmodulen ausgetauscht werden, beispielsweise bezüglich des Ladestands der Antriebsbatterie des Kraftfahrzeugs und/oder der aktuellen Leistungsanforderungen aufgrund des Fahrbetriebs, so dass nach vorgegebenen Algorithmen die Regelmodule ausreichend elektrische Energie aus dem Akku dem Kraftfahrzeug zuführen können. Das Regelmodul in dem Kraftfahrzeug kann Schnittstellen und Steuerungsfunktionen für die Koordination eines in dem Kraftfahrzeug vorhandenen Batteriemanagementsystems (BMS) mit dem Regelmodul in dem Anhänger ggf. mit einer Identifikationsfunktion bereitstellen.

Das Regelmodul in dem Anhänger kann in einer weiter vorteilhaften Ausführungsform über Energie- und/oder Kommunikationsleitungen mit dem Akku in dem Anhänger, mit einem Batteriemanagementsystem für den Akku, mit einem zusätzlichen Akkuwechselsystem in dem Anhänger, mit einem Rekuperationssystem zur Rückgewinnung von elektrischer Energie aus der mindestens einen Achse des Anhängers, mit einer Ladebuchse des Anhängers zum separaten Aufladen des Akkus, mit einer Photovoltaik-Anlage des Anhängers und/oder mit einem elektrischen Bordstromsystem des Anhängers verbunden sein. Durch die Integration des Regelmoduls in die verschiedenen elektrischen Verbraucher bzw. Erzeuger kann die Entnahme von elektrischer Energie aus dem Akku des Anhängers bzw. die Zuführung von elektrischer Energie zum Aufladen des Akkus zentral über das Regelmodul geregelt werden.

Das Regelmodul in dem Anhänger und/oder in dem Kraftfahrzeug kann mindestens eine Schnittstelle aufweisen, um das Regelmodul zeitweise mit einer Ladestation, mit einer Photovoltaik-Anlage zum Aufladen des Akkus und/oder mit einem in einem Gebäude fest installierten stationären Regelmodul zur Energieversorgung des Gebäudes zu verbinden. Das stationäre Regelmodul in dem Gebäude kann dabei das gleiche Kommunikationsprotokoll aufweisen wie die Regelmodule in dem Anhänger und/oder dem Kraftfahrzeug, so dass die Regelmodule besonders einfach und automatisiert Daten austauschen können, um den Fluss von elektrischer Energie zwischen dem Anhänger, dem Kraftfahrzeug und gegebenenfalls einem Gebäude sowie weiteren optional anschließbaren Verbrauchern bzw. Erzeugern elektrischer Energie zu regeln.

Das Regelmodul in dem Kraftfahrzeug kann über Energie- und/oder Kommunikationsleitungen mit einem Akku in dem Kraftfahrzeug, insbesondere der Antriebsbatterie, mit einem Batteriemanagementsystem für die Antriebsbatterie, mit einem zusätzlichen Akkuwechselsystem in dem Kraftfahrzeug, mit einer Ladebuchse des Kraftfahrzeugs, mit einer Photovoltaik-Anlage des Kraftfahrzeugs und/oder mit einem elektrischen Bordstromsystem des Kraftfahrzeugs verbunden sein. Durch die Integration des Regelmoduls in das Bordstromsystem bzw. die Elektronik des Kraftfahrzeugs kann das Regelmodul besonders einfach Informationen über die Antriebsbatterie des Kraftfahrzeugs und weiterer Verbraucher und/oder Erzeuger von elektrischer Energie sammeln und auswerten und damit die elektrische Energie aus dem Akku des Anhängers zu den jeweiligen Verbrauchern leiten, um die Antriebsbatterie des Kraftfahrzeugs zu unterstützen und die Reichweite zu erhöhen. Das Regelmodul in dem Kraftfahrzeug kann die Steuerung bzw. Aktivierung und Koordination der jeweiligen Antriebs- bzw. Hochvoltbatterie(n) im Kraftfahrzeug oder in dem Anhänger durch ein zusätzliches prioritäres Batteriemanagementsystem (BMS, Überwachung der Fahrzeugbatterie bzw. der einzelnen Zellen hinsichtlich Lade-/Entladezustand, Kapazität und Temperatur) ermöglichen. Des Weiteren ermöglicht das Regelmodul in dem Kraftfahrzeug vorzugsweise die Steuerung der Ladevorgänge (auch der Ladekombinationen) mit Wechselstrom (AC), Gleichstrom (DC), High Power Charging (HPC) ggf. bei Mehrfachanschluss (Zugfahrzeug und zeitgleich Anhänger), die Koordination bidirektionaler Anwendungen, die Anbindung von Zusatz-Akkus im Wechselsystem, die Schnittstelle für zusätzliche Bordstromsysteme, die Schnittstelle für die Anhängeranbindung ggf. mit CCS-Stecker (Combined Charging System), welche ggf. auch als ladefähiger Zugang ausgebildet sein kann und damit eine Mehrfachnutzung des Ladekabels ermöglicht, die Ansteuerung/Bedienung über eine App (Software-Programm) insbesondere auf einem Mobilgerät, die Prüfung, ob im Anhänger ein zugelassenes und kompatibles Regelmodul vorhanden ist und/oder die Koordination der Rekuperationsenergie der Anhängerachse/-n ab dem Start.

Das Regelmodul in dem Anhänger und das Regelmodul in dem Kraftfahrzeug können über eine lösbare Steckverbindung verbunden sein. Bei der Steckverbindung kann es sich um die einzige Steckverbindung zwischen dem Kraftfahrzeug und dem Anhänger handeln, so dass auch die Steuerleitungen insbesondere zur Ansteuerung der lichttechnischen Einrichtungen wie Fahrtrichtungsanzeiger und Beleuchtungen in die Steckverbindungen integriert sind. Über die Regelmodule in dem Kraftfahrzeug und in dem Anhänger können jeweils einzeln oder auch zusammen über entsprechende Schnittstellen intelligente Energieverteilungs-Systeme wie V2L/V2U (Vehicle-to-Load/ Vehicle-to-Utility, einzelne (230 V) Verbraucher können direkt am Elektrofahrzeug betrieben werden), V2H (Vehicle-to-Home, das Elektrofahrzeug kann gespeicherte Energie direkt in das Stromnetz des Hauses liefern), V2G (Vehicle-to-Grid, das Elektrofahrzeug kann die gespeicherte Energie direkt in das öffentliche Stromnetz abgeben), V2B (Vehicle-to-Building, das Elektrofahrzeug kann im Verbund mit anderen angekoppelten Fahrzeugen größere Gebäude versorgen) und V2V (Vehicle-to-Vehicle, das Elektrofahrzeug kann direkt andere E-Fahrzeuge laden), insbesondere auch während der Fahrt vom Anhänger in das Zugfahrzeug, realisiert werden.

Bei dem Kraftfahrzeug handelt es sich vorzugsweise um ein batteriebetriebenes Elektrofahrzeug (BEV), ein Brennstoffzellenfahrzeug mit Akku, ein Plug-in-Hybrid-Fahrzeug oder ein Mildhybrid-Fahrzeug, wobei der Akku vorzugsweise jeweils als Hochvolt-Antriebsbatterie ausgebildet ist. Als Kraftfahrzeuge kommen insbesondere Personenkraftwagen (PKW), Transporter, Vans, Reisemobile, Baufahrzeuge, Baumaschinen und Landwirtschaftsfahrzeuge mit Hybrid- oder vollelektrischem Antrieb in Frage. Durch die Regelmodule wird folglich eine Schnittstelle zur optionalen externen Anbindung von zusätzlichen Akkus/Hochvolt-Batterien für die genannten Fahrzeuge und auch Gebäude geschaffen. Der Anhänger kann beispielsweise in bekannter Weise zum Transport von Gütern mit einer Ladefläche, beispielsweise als Bootsanhänger, oder als Wohnwagen ausgebildet sein.

In einer besonders vorteilhaften Ausführungsform kann das System ein in einem Gebäude integriertes stationäres Regelmodul umfassen, welches mit dem Regelmodul in dem Anhänger über mindestens eine Energie- und/oder Kommunikationsleitung verbindbar ist. Das stationäre Regelmodul kann mit Verbrauchern und Erzeugern von elektrischer Energie in dem Gebäude verbunden sein, wie beispielsweise einem Akku in dem Gebäude, einem Batteriemanagementsystem für den Akku in dem Gebäude, einer Photovoltaik-Anlage des Gebäudes und/oder einem elektrischen Steuersystem des Gebäudes, wobei das stationäre Regelmodul die Informationen sammelt und auswertet und in Kommunikation mit dem Regelmodul in dem Anhänger bedarfsgerecht elektrische Energie aus dem Akku des Anhängers dem Gebäude zuführt oder Energie aus dem Gebäude in den Akku des Anhängers einspeichert. Hierzu kann das stationäre Regelmodul in dem Gebäude auch über einen vorzugsweise notstrom- bzw. ersatzstromfähigen Wechselrichter verfügen, um den Gleichstrom aus dem Akku bzw. der Antriebsbatterie in den für ein Gebäude üblichen Wechselstrom mit 230 V (einphasig) oder 400 V (Drehstrom) umzuwandeln und über Schnittstellen bereitzustellen. Auch kann das Regelmodul in dem Anhänger oder in dem Kraftfahrzeug ausgebildet sein, den Notbetrieb mit einem vorzugsweise in das Regelmodul integrierten Wechselrichter zur Versorgung des stationären Wechselrichters in dem Gebäude mit einer Versorgungs-/Betriebsspannung, insbesondere mit einer einphasigen Wechselspannung von beispielsweise 230 V oder 110 V, aufrecht zu erhalten. Im Fall eines Stromausfalls kann dann der Anschlussstecker des Wechselrichters in dem Gebäude abgesteckt und insbesondere mittels Schukokupplung an ein Verbindungskabel zu dem Regelmodul angesteckt werden. Über das Regelmodul in dem Anhänger und das stationäre Regelmodul in dem Gebäude können damit über entsprechende Schnittstellen intelligente Energieverteilungs-Systeme wie V2B (Vehicle-to-Building) und V2H (Vehicle-to-Home) realisiert werden.

Des Weiteren wird auch ein Regelmodul zur Überwachung und Regelung des Flusses von elektrischer Energie zwischen einem Energiespeicher und Verbrauchern bzw. Erzeugern elektrischer Energie beansprucht, wobei das Regelmodul mindestens eine Kommunikationsschnittstelle zur Kommunikation mit einem weiteren Regelmodul und eine Stromleitungsschnittstelle zur Leitung von elektrischer Energie zwischen dem Regelmodul und dem weiteren Regelmodul aufweist. Die Stromleitungsschnittstelle ist dabei insbesondere ausgebildet, elektrischen Strom mit einer Spannung von vorzugsweise mindestens 200 V, insbesondere mindestens 400 V, bis vorzugsweise maximal 800V (fahrzeugübliche Spannung) zu transportieren, wie dies bei den bekannten Fahrzeugen mit Hochvolt-Antriebsbatterien üblich ist. Folglich können die Regelmodule die gesamte Kommunikation und Verteilung der elektrischen Energie verwalten.

Das Regelmodul in dem Anhänger kann ausgebildet sein, bei Anschluss an einem Kraftfahrzeug zu prüfen, ob in dem Kraftfahrzeug ein zugelassenes und kompatibles Regelmodul vorhanden ist. Alternativ oder zusätzlich kann das Regelmodul in dem Anhänger bei Anschluss an ein Gebäude prüfen, ob bei der Verbindung zum Gebäude ein zulässiges und kompatibles stationäres Regelmodul in dem Gebäude installiert ist. Des Weiteren ermöglicht das Regelmodul in dem Anhängervorzugsweise die Koordination für bidirektionalen Einsatz, so dass durch die Anbindung an die Energieversorgung des Gebäudes eine Speicherung überschüssiger Energie beispielsweise aus einer Photovoltaik-Anlage des Gebäudes und/ oder die Koordination der gespeicherten Energie zur Versorgung von Verbrauchern in dem Gebäude, zumeist außerhalb der Zeit, in der die Erzeugung von erneuerbarer Energie erfolgt, ermöglicht wird. Das Regelmodul in dem Anhänger gewährleistet insbesondere zusammen mit dem stationären Regelmodul außerhalb der Reiseaktivitäten eine Energieübergabe an ein Gebäude und/oder ein Kraftfahrzeug, wodurch die Netzlast des Energieversorgungsunternehmens (EVU) gesenkt wird, beispielsweise durch V2H, V2G, V2B, V2V. Auch kann zusammen mit dem stationären Regelmodul die Versorgung des Wechselrichters in dem Gebäude zur Funktionssicherung bei Null-Einspeisung des EVU gewährleistet werden. Im Übrigen kann das Regelmodul in dem Anhänger auch die nachfolgenden Funktionen erfüllen: Koordination der aktiven Akkus bzw. Hochvoltbatterien, der Rekuperation und der Kommunikation mit dem Regelmodul im Kraftfahrzeug, Regelung der Rekuperationsenergie der Anhängerachsen (bei voll geladenem Akku bzw. Hochvoltbatterie im Anhänger wird die Rekuperationsenergie der Achse(n) des Anhängers ab Start an die Antriebseinheit des Kraftfahrzeugs übergeben bzw. eingespeist, um den Energieverlust in der Antriebseinheit zu reduzieren), Steuerung der Ladevorgänge (auch der Ladekombinationen bei mehrfach Ladeanschlüssen wie AC, DC, HPC im Kraftfahrzeug und zeitgleich im Anhänger, Überwachung der Spannung des Systems, wobei das System automatisch die vorhandene Spannung erkennt und in allen gängigen Bereichen der Bordspannung funktionsfähig ist, und/oder die Ansteuerung/Bedienung über einer App insbesondere auf einem Mobilgerät. Neben der Rekuperation kann auch ein elektrischer Antrieb der mindestens einen Achse des Anhängers vorgesehen sein, wobei der elektrische Antrieb an das Regelmodul ggf. unter Zwischenschaltung einer Motorsteuerung angeschlossen ist. Vorteilhaft kann ein elektrischer Motor an der mindestens einen Antriebsachse des Anhängers sowohl zum Antrieb als auch zur Rekuperation verwendet werden, wobei der Fluss an elektrischer Energie von dem Akku zu dem elektrischen Motor beim Antrieb und von dem elektrischen Motor zu dem Akku bei der Rekuperation vorzugsweise über das Regelmodul erfolgt bzw. gesteuert wird.

Das stationäre Regelmodul in dem Gebäude kann beispielsweise als Verbindungskabel ausgebildet sein und verbindet im Ruhezustand des Anhängers den Akku des Anhängers und/oder des Kraftfahrzeugs mit der Elektrik des Gebäudes. Hierzu kann das Verbindungskabel an mindestens einem Ende einen Stecker, beispielsweise einen CCS-Stecker (Combined Charging System), einen Typ-2-Stecker, einen Combo-2-Stecker oder einen CHAdeMO-Stecker, aufweisen, welcher in eine bidirektionale Ladestation des Gebäudes einsteckbar ist. Das Verbindungskabel, dient zur Koordination und Energieübertragung zwischen der bidirektionalen Ladestation in dem Gebäude und dem Regelmodul in dem Anhänger zur Anbindung des Akkus des Anhängers an die Energieversorgung des Gebäudes. Das Verbindungskabel kann vorzugsweise als Parallelkabel ausgebildet sein, in welchem neben Stromleitungen zur Übertragung von Energie zwischen dem Akku und dem Gebäude, insbesondere mit einer Spannung größer als 200 V bzw. größer/gleich 400 V, auch eine separate Stromleitung mit einer einphasigen Wechselspannung von beispielsweise 230 V oder 1 10 V und einer Kupplung, insbesondere Schukokupplung, zum Anschluss beispielsweise eines Wechselrichters des Gebäudes integriert ist, so dass in Richtung des Gebäudes mindestens zwei Anschlüsse (Stecker- bzw. Kupplung) an dem Verbindungskabel vorgesehen sind. Das stationäre Regelmodul ermöglicht dadurch die Speicherung von Photovoltaikenergie des Gebäudes, die Energierückeinspeisung zur Versorgung von externen Verbrauchern im Gebäude und auch zukünftige V2G-Systeme vor allem außerhalb der Zeit der Erzeugung von erneuerbaren Energien. Das stationäre Regelmodul ist insofern stationär, als dass es im Ruhezustand des Anhängers verwendet wird, um den Anhänger mit dem Gebäude elektrisch zu verbinden. Das stationäre Regelmodul muss jedoch nicht fest an dem Gebäude montiert sein und kann beispielsweise wie beschrieben als Verbindungskabel ausgebildet sein. Wird das stationäre Regelmodul hingegen in dem Gebäude fest montiert und über separate Leitungen zeitweise mit dem Regelmodul in dem Anhänger verbunden, kann das stationäre, fest installierte Regelmodul zusätzlich eine fest installierte Schnittstelle für die Versorgung eines Wechselrichters in einem Gebäude bereitstellen, um bei fehlender Energieversorgung im öffentlichen Netz weiterhin den Erhalt der Wechselrichterfunktion im Gebäude (DC zu AC) zur Energieeinspeisung aus dem Akku im Anhänger in das Gebäude ohne bidirektionale Ladestation zu ermöglichen. So kann beispielsweise der Wechselrichter in dem Gebäude über das stationäre, fest installierte Regelmodul an der öffentlichen Energieversorgung angeschlossen sein. Das stationäre Regelmodul kann galvanisch getrennt die Spannung der öffentlichen Energieversorgung überwachen und bei einem Stromausfall unmittelbar auf eine Energieversorgung für den Wechselrichter in dem Gebäude und ggf. für weitere angeschlossene elektrische Verbraucher aus dem Akku des Anhängers umschalten. Für eine V2V Anwendung, also die direkte Ladung eines Elektrofahrzeugs über das stationäre Regelmodul oder das Regelmodul in dem Anhänger, kann in mindestens einem Regelmodul ein Energie-Abgabezähler integriert sein, der vorzugsweise in Verbindung mit einer App die übertragene Energiemenge dokumentiert und eine Abrechnung bei V2V ermöglicht.

Die Anschlüsse der Kommunikations- und/oder Stromleitungsschnittstelle können dabei in einem Stecksystem zusammengefasst sein, so dass mit einem einzigen Stecksystem mehrere derartige Regelmodule miteinander verbunden werden können, um Kommunikationsdaten oder elektrische Energie zwischen den Regelmodulen auszutauschen.

Des Weiteren wird ein Verfahren zur mobilen Energieversorgung insbesondere von Kraftfahrzeugen oder Gebäuden beansprucht, wobei in einem Anhänger ein Akku sowie ein Regelmodul für den Akku vorgesehen ist und das Regelmodul die Abführung von elektrischer Energie aus dem Akku zu Verbrauchern und die Zuführung von elektrischer Energie zu dem Akku regelt.

Vorteilhaft kann vorgesehen sein, dass gemäß dem Verfahren in einem Kraftfahrzeug oder in einem Gebäude ein weiteres Regelmodul vorgesehen ist, wobei die Regelmodule über mindestens eine Strom- und/oder Kommunikationsleitung miteinander verbunden werden, so dass die Regelmodule elektrische Energie zu Verbrauchern leiten können, welche an die Regelmodule angeschlossen sind, und elektrische Energie dem Akku insbesondere in dem Anhänger zuführen können. Die verschiedenen Regelmodule tauschen sich dabei über die Kommunikationsleitung über den aktuellen Bedarf an elektrischer Energie aus und regeln aufbauend hierauf die Zuführung von elektrischer Energie über die Stromleitungen zu den jeweiligen Verbrauchern.

Kraftfahrzeuge mit hybridem oder vollelektrischem Antrieb können mit den Regelmodulen durch ein integriertes Batteriewechselsystem im Kraftfahrzeug und/oder durch den im Anhänger integrierten Akku ihre Autarkie sowie die Reichweite signifikant erhöhen. Die Variabilität der eingesetzten zusätzlichen Akkus erlaubt eine anlassbezogene Erweiterung, passend zum Einsatzzweck des Endverbrauchers und der verfügbaren Systemspannung. Der vorzugsweise als Hochvolt-Zusatzbatterie im Anhänger ausgebildete Akku kann im Zuge des zukünftigen Fortschritts der V2x-Technologien (Vehicle-to-Everything, Technologie zum bidirektionalen Laden umfassend V2L/V2U, V2H, V2G, V2B und V2V) als elektrischer Energiespeicher beispielsweise für Photovoltaikstrom eingesetzt werden und diesen an Verbraucher daheim oder an das öffentliche Netz abgeben. Weiterhin steht die gespeicherte Energie im mobilen Betrieb dem Anhänger jederzeit direkt zur Verfügung und kann das bislang unabhängige Energiesystem des Anhängers (beispielsweise bei Wohnwagen) ersetzen. Die Regelmodule ermöglichen zudem, die Rekuperationsenergie der Achsen des Anhängers zu nutzen und lassen das kombinierte Laden von Kraftfahrzeug- und Anhängerbatteriesystem an einem einzelnen Ladepunkt zu. Dies ergibt einen Mehrfachnutzen für dauerhaften Einsatz sowohl im stationären wie im mobilen Betrieb, dient zur Kostensenkung sowie zum Erhalt der Batteriesysteme. Die mit den Regelmodulen ausgerüsteten Kraftfahrzeuge und Anhänger bieten die ideale Ergänzung zum bidirektionalen Laden und ermöglichen die Energiespeicherung im privaten Sektor zur Erreichung der autarken Versorgung von Wohnhäusern. Darüber hinaus können diese Kraftfahrzeuge im öffentlichen Versorgungsnetz zur erhöhten Sicherheit der Energieversorgung für Gebäude und Mobilität bei Störung im öffentlichen Versorgungsnetz beitragen.

Das Regelmodul im Kraftfahrzeug wird vorzugsweise an zentraler Stelle im Kraftfahrzeug und/oder im Leistungspfad zwischen dem Antriebs- und Motorsteuerungssystem des Kraftfahrzeugs (Powertrain) und der Antriebsbatterie angeordnet. Ein optionales Batteriewechselsystem kann zusätzlich beispielsweise im Laderaum des Kraftfahrzeugs vorgesehen sein. Das Regelmodul im Anhänger wird vorzugsweise im Anhänger an zentraler Stelle im Leistungspfad zwischen dem angekoppelten Kraftfahrzeug und dem Akku des Anhängers angeordnet.

Derartige Regelmodule ggf. mit Akku im Anhänger oder Batteriewechselsystem im Kraftfahrzeug können auch einfach in bestehende Kraftfahrzeuge und/oder Anhänger eingebaut werden, ein entsprechendes Umrüstverfahren sowie ein Gespann aus dem beschriebenen Kraftfahrzeug mit dem beschriebenen angehängten Anhänger stellt eine eigenständige Erfindung dar. Durch eine derartige Nachrüstlösung für Neufahrzeuge oder für die effiziente Umrüstung von Kraftfahrzeugen auf E-Mobilität wird mit der intelligenten Einbindung des Akkus im Anhänger und/oder das Batteriewechselsystem im Kraftfahrzeug eine hohe elektrische Reichweite erreicht. Dabei kann das Gesamtsystem als Speicher für bidirektionales Laden genutzt werden. Dies ist vor allem bei Reise- und Wohnmobilen mit einer systembedingt stark begrenzten Zuladung vorteilhaft.

Die jeweiligen Regelmodule sind vorzugsweise in sich abgeschlossene Einheiten basierend auf Komponenten eines eingebetteten Systems zur Überwachung und Steuerung der Energiequellen und -Senken sowie der Leistungsverteilung in Kraftfahrzeug und Anhänger. Die Versorgung der Regelmodule erfolgt über das Bordspannungsnetz des Kraftfahrzeugs mit einer Spannung vorzugsweise zwischen 12 V und 48 V bzw. aus der Hochvoltbatterie(n) im Bereich von 200 bis 800V.

Es wird zusätzlich auch ein Fahrzeug, insbesondere ein Elektrofahrzeug oder ein Anhänger, beansprucht, welches einen Akku bzw. eine Antriebsbatterie sowie das zuvor beschriebene Regelmodul, welches mit dem Akku bzw. der Antriebsbatterie verbunden ist, umfasst.

Weitere Besonderheiten und Vorzüge der Erfindung ergeben sich aus der folgenden Beschreibung bevorzugter Ausführungsbeispiele anhand der Zeichnungen. Es zeigen:
- Fig. 1: eine schematische Darstellung eines Kraftfahrzeugs in Form eines PKW mit einem angehängten Anhänger in Form eines Wohnwagens (Caravan);
- Fig. 2: eine schematische Darstellung eines Kraftfahrzeugs in Form eines Wohnmobils bzw. Reisemobils mit einem angehängten Anhänger in Form eines Bootanhängers und
- Fig. 3: ein schematisches Blockdiagramm von elektrischen Komponenten in dem Kraftfahrzeug und dem Anhänger der Figur 2.

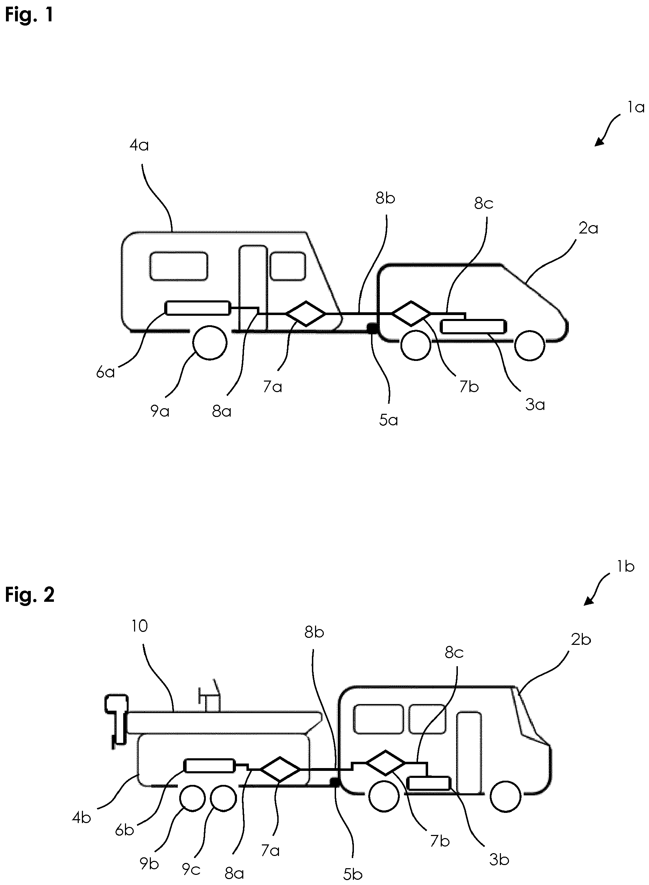

In Figur 1 ist ein System 1a zur mobilen Energieversorgung eines als Pkw ausgebildeten Elektrofahrzeugs 2a mit einer Antriebsbatterie 3a schematisch gezeigt. Das System 1a umfasst einen Anhänger 4a in Form eines Wohnwagens, welcher in bekannter Weise an das Elektrofahrzeug 2a über eine Anhängerkupplung 5a angekuppelt ist. In dem Anhänger 4a ist ein Akku 6a sowie ein Regelmodul 7a zur Versorgung des Kraftfahrzeugs 2a aus dem Akku 6a vorgesehen. Das System 1a umfasst des Weiteren ein in dem Kraftfahrzeug 2a angeordnetes weiteres Regelmodul 7b, welches mit dem Regelmodul 7a in dem angehängten Anhänger 4a über eine Kommunikations- und Energieleitung 8a, 8b, 8c verbunden ist, um während der Fahrt des Kraftfahrzeugs 2a elektrische Energie von dem Akku 6a in dem Anhänger 4a dem Kraftfahrzeug 2a zuzuführen und damit die Reichweite zu erhöhen. Der Anhänger 4a weist eine einzelne Anhängerachse 9a auf, welche ausgebildet ist, mittels Rekuperation Bewegungsenergie in elektrische Energie umzuwandeln und damit elektrische Energie beim Abbremsvorgang zu erzeugen, wodurch ggf. der Akku 6a oder auch die Antriebsbatterie 3a über die Regelmodule 7a, 7b geladen werden können.

In Figur 2 ist ein weiteres System 1b zur mobilen Energieversorgung eines als Wohnmobil bzw. Reisemobil ausgebildeten Elektrofahrzeugs 2b mit einer Antriebsbatterie 3b schematisch gezeigt. Das System 1b umfasst einen als Bootsanhänger ausgebildeten Anhänger 4b, auf welchem ein Boot 10 befestigt ist. Im Wesentlichen unterscheidet sich das System 1b jedoch nicht von dem in Figur 1 gezeigten System 1a, insbesondere sind dort ebenfalls entsprechend ausgebildete Regelmodule 7a, 7b in dem Anhänger 4b bzw. dem Elektrofahrzeug 2b vorgesehen. Auch ist in dem Elektrofahrzeug 2b eine Antriebsbatterie 3b und in dem Anhänger 4b ein Akku 6b angeordnet. Anders als der Anhänger 4a weist der Anhänger 4b jedoch zwei Achsen 9b, 9c auf, welche ebenfalls ausgebildet sind, mittels Rekuperation Bewegungsenergie in elektrische Energie umzuwandeln und damit elektrische Energie zum Aufladen des Akkus 6b bzw. der Antriebsbatterie 3b bereitzustellen. Die Funktionsweise der Regelmodule 7a; 7b und der weiteren Verbraucher und Erzeuger von elektrischer Energie, welche an den Regelmodulen 7a, 7b angeschlossen werden können, werden in Bezug auf die nachfolgende Figur im Detail beschrieben.

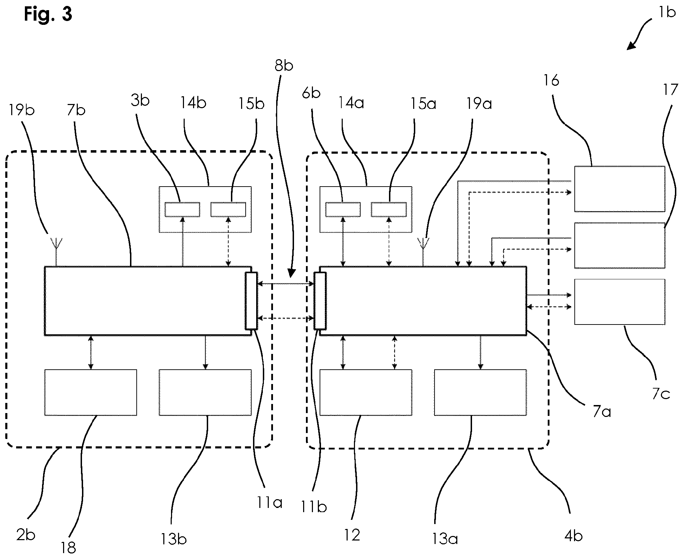

In Figur 3 ist ein schematisches Blockdiagramm von elektrischen Komponenten des Systems 1b gezeigt, welche unter anderem in dem Elektrofahrzeug 2b und dem Anhänger 4b vorgesehen sind. Die gezeigten Komponenten können jedoch auch in dem System 1a mit dem Elektrofahrzeug 2a und dem Anhänger 4a verwendet werden. Das Elektrofahrzeug 2a bzw. 2b umfasst einen nicht dargestellten Elektro-Antriebsmotor zum Antrieb mindestens einer Achse des Elektrofahrzeugs 2a bzw. 2b.

Wie der schematischen Darstellung mit der gestrichelten Umrandung zu entnehmen ist, sind ein Teil der elektrischen Komponenten in dem Elektrofahrzeug 2b und ein weiterer Teil in dem Anhänger 4b angeordnet. Das Regelmodul 7b ist in dem Elektrofahrzeug 2b und das Regelmodul 7a in dem Anhänger 4b angeordnet. Die Regelmodule 7a, 7b weisen jeweils ein Steckersystem 11a, 11b auf, welches die Verbindung der Regelmodule 7a, 7b über ein vorzugsweise lösbares Verbindungskabel ermöglicht. Wie schematisch angedeutet, kann das Verbindungskabel eine allgemein mit einer gestrichelten Linie dargestellte Kommunikationsleitung und eine allgemein mit einer durchgehenden Linie dargestellte Energieleitung bzw. Stromführung umfassen. Hierdurch ist es möglich, zwischen den Regelmodulen 7a, 7b Informationen und elektrische Energie, insbesondere elektrische Energie mit einer Spannung von größer 200 V (bordübliche Spannung), besonders bevorzugt größer 400 V, auszutauschen und damit die Reichweite des Elektrofahrzeugs 2b zu erhöhen. Es ist vorgesehen, dass die Regelmodule 7a, 7b mit weiteren Komponenten in dem Elektrofahrzeug 2b bzw. in dem Anhänger 4b verbunden sind. Das Regelmodul 7a in dem Anhänger 4b ist beispielsweise über Energie- und/und Kommunikationsleitungen mit einem Rekuperationssystem 12 des Anhängers 4b verbunden, um bei Bedarf die Bewegungsenergie an den Achsen 9b, 9c des Anhängers 4b in elektrische Energie umzuwandeln. Des Weiteren ist das Regelmodul 7a auch über eine Energieleitung und gegebenenfalls eine nicht dargestellte Kommunikationsleitung mit einem Bordstromsystem 13a des Anhängers 4b verbunden. Bei dem Bordstromsystem 13a kann es sich in einfacher Ausführung um die Komponenten der lichttechnischen Einrichtungen handeln, insbesondere bei Anhängern in Form von Wohnwagen kann das Bordstromsystem 13a jedoch auch deutlich komplexer sein und die komplette Energie- und Regelungstechnik für die elektrischen Komponenten des Wohnwagens umfassen.

Das Regelmodul 7a ist schließlich auch über zumindest eine Energieleitung mit dem Akku 6b des Anhängers 4b verbunden. Der Akku 6b ist in einem Batteriesystem 14a mit einem Batteriemanagementsystem 15a zur Überwachung des Akkus 6b integriert. Das Regelmodul 7a kann mit dem Batteriemanagementsystem 15a über zumindest eine Kommunikationsleitung verbunden sein, um Informationen bezüglich des Zustands des Akkus 6b abzurufen.

Wie der Figur 3 weiter zu entnehmen ist, kann das Regelmodul 7a über vorzugsweise lösbare Kommunikations- und/oder Energieleitungen mit elektrischen Komponenten außerhalb des Anhängers 4b verbunden sein. Bei diesen elektrischen Komponenten kann es sich beispielsweise um eine Ladestation 16 zum Aufladen des Akkus 6b, um eine Photovoltaik-Anlage 17 ebenfalls zum Aufladen des Akkus 6b oder um ein weiteres Regelmodul 7c handeln. Das weitere Regelmodul 7c ist vorzugsweise in einem Gebäude fest installiert und damit stationär ausgebildet. Die Photovoltaik-Anlage 17 kann beabstandet von dem Anhänger 4b vorgesehen und insbesondere ebenfalls mobil ausgebildet sein, es ist jedoch auch möglich, die Photovoltaik-Anlage 17 fest an dem Anhänger 4b zu installieren. Das stationäre Regelmodul 7c ist vorzugsweise in die elektrische Haustechnik eines Gebäudes integriert und ermöglicht es, überschüssige Energie aus dem Gebäude zum Aufladen des Akkus 6b dem Anhänger 4b zuzuführen oder bei einem Energiebedarf des Gebäudes elektrische Energie aus dem Akku 6b dem Gebäude zuzuführen, was über eine Kommunikation zwischen den Regelmodulen 7a und 7c automatisch geregelt wird. So ist beispielsweise möglich, dass über den Tagesverlauf erzeugte elektrische Energie einer Photovoltaik-Anlage des Gebäudes nicht nur in einem Akku in dem Gebäude, sondern auch in dem Akku 6b gespeichert wird. Das stationäre Regelmodul 7c kann mit der Photovoltaik-Anlage des Gebäudes, einem Akku in dem Gebäude und weiteren Verbrauchern und Erzeugern elektrischer Energie in dem Gebäude verbunden sein und Informationen sammeln und auswerten, um den elektrischen Fluss zwischen den Komponenten in dem Gebäude und dem Anhänger 4b und ggf. auch Komponenten in dem an den Anhänger 4b angehängten Elektrofahrzeug 2b zu regeln, so dass immer ausreichend elektrische Energie zur Verfügung steht und gleichzeitig alle erzeugte Energie auch zwischengespeichert werden kann.

Das Regelmodul 7b in dem Elektrofahrzeug 2b ist ebenfalls mit verschiedenen Komponenten innerhalb des Elektrofahrzeugs 2b verbunden. Wie auch der Anhänger 4b weist das Elektrofahrzeug 2b ein Batteriesystem 14b auf, welches ein Batteriemanagementsystem 15b für die Antriebsbatterie 3b sowie die Antriebsbatterie 3b umfasst. Um Informationen bezüglich des Zustands der Antriebsbatterie 3b abzufragen, ist das Regelmodul 7b über mindestens eine Kommunikationsleitung mit dem Batteriemanagementsystem 15b verbunden. Zudem ist das Regelmodul 7b über mindestens eine Energieleitung direkt mit der Antriebsbatterie 3b verbunden, um der Antriebsbatterie 3b elektrische Energie insbesondere mit einer Spannung von größer 200 V zum Aufladen zuzuführen. Anders als mit der Pfeilrichtung dargestellt, kann das Regelmodul 7b jedoch auch elektrische Energie aus der Antriebsbatterie 3b entnehmen, beispielsweise um vor einer Aufladung der Antriebsbatterie 3b und des Akkus 6b noch während der Fahrt den Ladezustand der Antriebsbatterie 3b und des Akkus 6b aneinander anzugleichen. Alternativ kann auch elektrische Energie aus der Antriebsbatterie 3b über das Regelmodul 7b entnommen werden, um weitere elektrische Verbraucher zu versorgen.

Wie der Figur 3 weiter zu entnehmen ist, kann in dem Fahrzeug 2b auch ein Bordstromsystem 13b vorgesehen sein, mit welchem das Regelmodul 7b über mindestens eine Kommunikations- und/oder Energieleitung verbunden ist, um Informationen und/oder elektrische Energie gegebenenfalls in beide Richtungen zu übertragen. Zusätzlich ist in dem Elektrofahrzeug 2b auch ein Batteriewechselsystem 18 vorgesehen, welches über mindestens eine Energieleitung mit dem Regelmodul 7b verbunden ist. An das Batteriewechselsystem 18 können zusätzliche Akkus angeschlossen und bei Bedarf auch einfach ausgetauscht werden, um eine zusätzliche Energiequelle insbesondere bei einem vorübergehend höheren Energiebedarf (z.B. Langstreckenfahrt) zu ermöglichen. Durch das Austauschen der Akkus in dem Batteriewechselsystem 18 werden unnötige Wartezeiten zum Aufladen vermieden.

Die Regelmodule 7a, 7b und gegebenenfalls 7c können jeweils ein Funkmodul 19a, 19b aufweisen, um Daten mit entfernten Geräten, insbesondere mit Mobilgeräten wie Handys und Tabletts auszutauschen. Über eine entsprechende App auf den Mobilgeräten können die Daten übersichtlich dargestellt werden und es ist auch möglich, Einstellungen an den Regelmodulen 7a, 7b, 7c vorzunehmen.

Durch entsprechende Algorithmen in den Regelmodulen 7a, 7b, 7c kann die elektrische Energie effizient zu den jeweiligen Verbrauchern geleitet werden und es ist sichergestellt, dass alle zugeführte Energie optimal auf die Energiespeicher, also die Antriebsbatterie/-n und die Akkus, sowie die Verbraucher verteilt wird. Zur Klarstellung wird darauf hingewiesen, dass es sich bei der Antriebsbatterie ebenfalls um einen Akku handelt, welcher jedoch in dem Elektrofahrzeug dafür vorgesehen ist, einen elektrischen Antrieb mit elektrischer Energie für den Antrieb des Elektroautos zu versorgen. Derartige Antriebsbatterien weisen oftmals eine Spannung von größer 200 V auf und werden in allen Elektrofahrzeugen (batteriebetriebenen Elektrofahrzeuge (BEV), Plug-in-Hybrid-Fahrzeuge (PHEV), Brennstoffzellenfahrzeuge (FCEV)) verwendet. Als Batterie ist folglich ein Energiespeicher im Kraftfahrzeug oder Anhänger zu verstehen, welcher vorzugsweise aus mehreren wiederaufladbaren Sekundärzellen (Akkumulatoren) besteht, die parallel oder seriell verschaltet sind, um im Betrieb die notwendigen Spannungen und Ströme bereitstellen zu können.

Das Regelmodul 7b in dem Elektrofahrzeug 2b verbindet das Batteriemanagementsystem 15b des Elektrofahrzeugs 2b mit dem Batteriemanagementsystem 15a des zusätzlichen Akkus 6b in dem Anhänger 4b. Das Regelmodul 7b dient dem Energiemanagement, dem Steuern der bidirektionalen Leistungsübertragung zwischen Elektrofahrzeug 2b und dem Anhänger 4b, der zugfahrzeugseitigen Koordination der Rekuperation und stellt eine Schnittstelle zu einem zusätzlichen und unabhängigen Bordstromsystem 13b des Elektrofahrzeugs 2b bereit. Darüber hinaus bietet das Regelmodul 7b die Möglichkeit der Anbindung von ergänzenden Zusatzbatterien im Wechselsystem 18 an, die beispielsweise im Laderaum des Kraftfahrzeugs untergebracht sein können. Das Regelmodul 7a im Anhänger 4b dient der Identifikation gegenüber dem Regelmodul 7b im Kraftfahrzeug 2b, koordiniert die Nutzung des Akkus 6b als bidirektionalen Speicher sowie die Rekuperation über die Achse(n) 9b, 9c des Anhängers 4b. Das stationäre Regelmodul 7c koordiniert die Anbindung von Regelmodul 7a an zukünftige V2G-Systeme. Das beschriebene System erlaubt den Einsatz von Hochvoltbatterien in einem Anhänger sowie in einem Wechselsystem eines Elektrofahrzeugs und erlaubt in allen Betriebssituationen einen koordinierten Energieaustausch zwischen dem fahrzeugeigenen Batteriesystem, einem zusätzlichen Batteriewechselsystem in einem Elektrofahrzeug und einem Akku des Anhängers, auch in Verbindung mit V2G-Systemen.

Das Regelmodul 7b in dem Elektrofahrzeug 2b ermöglicht insbesondere folgende Funktionen: Kommunikation mit dem BMS 15b des Elektrofahrzeugs 2b, Kommunikation mit dem BMS 15a des Anhängers 4b über das Regelmodul 7a, Kommunikation mit dem Regelmodul 7a im Anhänger 4b zwecks Identifizierung und Leistungsmanagement, Steuerung bzw. Aktivierung und Koordination des Energieflusses vom und zum Elektrofahrzeug 2b, Steuerung der Ladevorgänge bei AC- oder DC-Ladung ggf. auch bei zeitgleicher Ladung von Elektrofahrzeug 2b und Anhänger 4b, Koordination der Rekuperationsenergie der Anhängerachse(n) 9a, 9b, 9c, Anbindung von Zusatz-Akkus im Wechselsystem 18, die im Laderaum des Elektrofahrzeugs 2b untergebracht sein können, Schnittstelle für zusätzliche Bordstromsysteme 13b, z.B. im Wohnmobil, Steckersystem für Kommunikation und Leistungsübertragung zum Anschluss des Anhängers 4b und/oder Kommunikation mit einer App auf einem mobilen Endgerät bzw. Mobilgerät.

Das Regelmodul 7a in dem Anhänger 4b ermöglicht insbesondere die folgenden Funktionen: Kommunikation mit dem BMS 15a des Akkus 6b des Anhängers 4b, Kommunikation mit dem Regelmodul 7b im Kraftfahrzeug 2b zwecks Identifizierung, Kommunikation mit dem Regelmodul 7b im Kraftfahrzeug 2b zwecks Energie- und Leistungsmanagements, Koordination für bidirektionalen Einsatz und Regulierung der Leistung des vorzugsweise als Hochvoltbatterie ausgebildeten Akkus 6b, Steuerung der Ladevorgänge bei AC- oder DC-Ladung auch bei zeitgleicher Ladung von Kraftfahrzeug 2b und Anhänger 4b, Koordination der Anwendung als stationärer Energiespeicher für Photovoltaik-Anlage und V2X-Anwendungen, Anschluss für weitere Bordstromsysteme nach Kundenwunsch, universelle Anschlüsse sind ggf. vorhanden, Anschluss und Kommunikation mit Photovoltaik-Anlage 17, Anschluss und Kommunikation mit stationärem Regelmodul 7c für (zukünftige) V2G-Systeme, Kommunikation mit einer App auf einem mobilen Endgerät bzw. Mobilgerät und/oder Anbindung des Rekuperationssystems der Anhängerachse(n) 9a, 9b, 9c.

### Bezugszeichenliste:

- 1a, 1b: System zur mobilen Energieversorgung
- 2a, 2b: Elektrofahrzeug
- 3a, 3b: Antriebsbatterie
- 4a; 4b: Anhänger
- 5a, 5b: Anhängerkupplung
- 6a,6b: Akku
- 7a, 7b, 7c: Regelmodul
- 8a, 8b, 8c: Energie- und/oder Kommunikationsleitung
- 9a, 9b, 9c: Achse
- 10: Boot
- 11a, 11b: Steckersystem
- 12: Rekuperationssystem
- 13a, 13b: Bordstromsystem
- 14a, 14b: Batteriesystem
- 15a, 15b: Batteriemanagementsystem
- 16: Ladestation
- 17: Photovoltaik-Anlage
- 18: Batteriewechselsystem
- 19a, 19b: Funkmodul

## Patentansprüche

1. System (1a; 1b) zur mobilen Energieversorgung, insbesondere zur Energieversorgung von Kraftfahrzeugen und Gebäuden,
**dadurch gekennzeichnet,**
**dass** das System (1a; 1b) einen Anhänger (4a; 4b) zur zeitweisen Ankupplung an ein Kraftfahrzeug (2a; 2b) umfasst, wobei in dem Anhänger (4a; 4b) mindestens ein Akku (6a; 6b) sowie ein Regelmodul (7a) zur Versorgung des Kraftfahrzeugs (2a; 2b) aus dem mindestens einen Akku (6a; 6b) vorgesehen sind.

2. System (1a; 1b) nach Anspruch 1,
**dadurch gekennzeichnet,**
**dass** das System (1a; 1b) ein in einem Kraftfahrzeug (2a; 2b) angeordnetes weiteres Regelmodul (7b) umfasst, welches mit dem Regelmodul (7a) in dem angehängten Anhänger (4a; 4b) über mindestens eine Energieleitung verbunden ist, insbesondere um während der Fahrt des Kraftfahrzeugs (2a; 2b) elektrische Energie von dem Akku (6a; 6b) in dem Anhänger (4a; 4b) dem Kraftfahrzeug (2a; 2b) zuzuführen.

3. System (1a; 1b) nach Anspruch 2,
**dadurch gekennzeichnet,**
**dass** das Regelmodul (7a) in dem angehängten Anhänger (4a; 4b) und das Regelmodul (7b) in dem Kraftfahrzeug (2a; 2b) über mindestens eine Kommunikationsleitung (8b) miteinander verbunden sind.

4. System (1a; 1b) nach einem der Ansprüche 1 bis 3,
**dadurch gekennzeichnet,**
**dass** das Regelmodul (7a) in dem Anhänger (4a; 4b) über Energie- und/oder Kommunikationsleitungen (8a; 8b; 8c) mit dem Akku (6b) in dem Anhänger (4a; 4b), mit einem Batteriemanagementsystem (15a), mit einem Rekuperationssystem (12) zur Rückgewinnung von elektrischer Energie aus der mindestens einen Achse (9a; 9b; 9c) des Anhängers (4a; 4b), mit einer Ladebuchse des Anhängers (4a; 4b), mit einer Photovoltaik-Anlage (17) des Anhängers (4a; 4b) und/oder mit einem elektrischen Bordstromsystem (13a) des Anhängers (4a; 4b) verbunden ist.

5. System (1a; 1b) nach einem der Ansprüche 1 bis 4,
**dadurch gekennzeichnet,**
**dass** das Regelmodul (7a; 7b) in dem Anhänger (4a; 4b) und/oder in dem Kraftfahrzeug (2a; 2b) mindestens eine Schnittstelle aufweist, um das Regelmodul (7a; 7b) zeitweise mit einer Ladestation (16) und/oder einer Photovoltaik-Anlage (17) zum Aufladen des Akkus (6b) und/oder mit einem in einem Gebäude fest installierten stationären Regelmodul (7c) zur Energieversorgung des Gebäudes zu verbinden.

6. System (1a; 1b) nach einem der Ansprüche 2 bis 5,
**dadurch gekennzeichnet,**
**dass** das Regelmodul (7b) in dem Kraftfahrzeug (2a; 2b) über Energie- und/oder Kommunikationsleitungen mit einem Akku in dem Kraftfahrzeug (2a; 2b), insbesondere mit der Antriebsbatterie (3a; 3b), mit einem Batteriemanagementsystem (15b), mit einem zusätzlichen Batteriewechselsystem (18) in dem Kraftfahrzeug (2a; 2b), mit einer Ladebuchse des Kraftfahrzeugs (2a; 2b), mit einer Photovoltaik-Anlage des Kraftfahrzeugs (2a; 2b) und/oder mit einem elektrischen Bordstromsystem (13b) des Kraftfahrzeugs (2a; 2b) verbunden ist.

7. System (1a; 1b) nach einem der Ansprüche 2 bis 6,
**dadurch gekennzeichnet,**
**dass** das Regelmodul (7a) in dem Anhänger (4a; 4b) und das Regelmodul (7b) in dem Kraftfahrzeug (2a; 2b) über eine lösbare Steckverbindung (11a; 11b) verbunden sind.

8. System (1a; 1b) nach einem der vorhergehenden Ansprüche,
**dadurch gekennzeichnet,**
**dass** es sich bei dem Kraftfahrzeug (2a; 2b) um ein batteriebetriebenes Elektrofahrzeug, ein Brennstoffzellenfahrzeug oder ein Plug-In-Hybrid-Fahrzeug handelt und die Antriebsbatterie (3a; 3b) eine Hochvolt-Antriebsbatterie bildet.

9. System (1a; 1b) nach einem der vorhergehenden Ansprüche,
**dadurch gekennzeichnet,**
**dass** das System (1a; 1b) ein in einem Gebäude integriertes stationäres Regelmodul (7c) umfasst, welches mit dem Regelmodul (7a) in dem Anhänger (4a; 4b) über mindestens eine Energie- und/oder Kommunikationsleitung verbindbar ist.

10. Regelmodul (7a; 7b; 7c) zur Überwachung und Regelung des Flusses von elektrischer Energie zwischen einem Energiespeicher und Verbrauchern bzw. Erzeugern elektrischer Energie,
**dadurch gekennzeichnet,**
**dass** das Regelmodul (7a; 7b; 7c) mindestens eine Kommunikationsschnittstelle (1 1a; 11b) zur Kommunikation mit einem weiteren Regelmodul (7a; 7b; 7c) und eine Stromleitungsschnittstelle (11a; 11b) zur Leitung von elektrischer Energie zwischen dem Regelmodul (7a; 7b; 7c) und dem weiteren Regelmodul (7a; 7b; 7c) aufweist.

11. Regelmodul (7a; 7b; 7c) nach Anspruch 10,
**dadurch gekennzeichnet,**
**dass** die Anschlüsse der Kommunikations- und/oder Stromleitungsschnittstelle in einem Steckersystem (11a; 11b) zusammengefasst sind.

12. Verfahren zur mobilen Energieversorgung insbesondere von Kraftfahrzeugen oder Gebäuden,
**dadurch gekennzeichnet,**
**dass** in einem Anhänger (4a; 4b) ein Akku (6a; 6b) sowie ein Regelmodul (7a) für den Akku (6a; 6b) vorgesehen ist, wobei das Regelmodul (7a) die Leitung von elektrischer Energie aus dem Akku (6a; 6b) zu Verbrauchern und die Zuführung von elektrischer Energie zu dem Akku (6a; 6b) regelt.

13. Verfahren nach Anspruch 12,
**dadurch gekennzeichnet,**
**dass** in einem Kraftfahrzeug (2a; 2b) oder in einem Gebäude ein weiteres Regelmodul (7b; 7c) vorgesehen ist, wobei die Regelmodule (7a; 7b; 7c) über mindestens eine Strom- und/oder Kommunikationsleitung miteinander verbunden sind, um die elektrische Energie über die Regelmodule (7a; 7b; 7c) zu Verbrauchern zu leiten und elektrische Energie über die Regelmodule (7a; 7b; 7c) dem Akku (6a; 6b) zuzuführen.

14. Fahrzeug, insbesondere Elektrofahrzeug (2a; 2b) oder Anhänger (4a; 4b), **gekennzeichnet durch**
einen Akku (4a; 4b) oder eine Antriebsbatterie (3a; 3b) sowie ein damit verbundenes Regelmodul (7a; 7b) nach einem der Ansprüche 10 oder 11.
